# EUROPÄISCHE PATENTSCHRIFT

(11) **EP 3 883 758 B1**
(45) Veröffentlichungstag und Bekanntmachung des Hinweises auf die Patenterteilung: **11.01.2023**
(21) Anmeldenummer: 19802124.8
(22) Anmeldetag: 07.11.2019
(51) Int. Cl.: B29C 70/52, B29C 53/72, B29C 53/80

(54) **STRANGZIEHVORRICHTUNG SOWIE STRANGZIEHVERFAHREN**
PULTRUSION DEVICE AND PULTRUSION METHOD
DISPOSITIF ET PROCÉDÉ D'ÉTIRAGE

(30) Priorität: 19.11.2018 DE 102018219810
(43) Veröffentlichungstag der Anmeldung: 29.09.2021
(73) Patentinhaber: VOLKSWAGEN AKTIENGESELLSCHAFT, 38440 Wolfsburg (DE)
(72) Erfinder: HOHM, Volker, 38162 Destedt (DE)
(86) Internationale Anmeldenummer: PCT/EP2019/080461
(87) Internationale Veröffentlichungsnummer: WO 2020/104196

(56) Entgegenhaltungen:
- DE-A1-102015 214 909
- DE-B3-102015 214 076

## Beschreibung

Die Erfindung betrifft eine Strangziehvorrichtung sowie ein Strangziehverfahren, wobei die Strangziehvorrichtung eine Wickeleinrichtung aufweist, mittels welcher parallel zu einer Mittellängsachse der Wickeleinrichtung verlaufendes Fasermaterial mit zumindest einer Verstärkungsfaser in Winkellage zu der Mittellängsachse der Wickeleinrichtung umwickelt wird. Hierfür weist die Wickeleinrichtung wenigstens zwei in Richtung der und koaxial zur Mittellängsachse zueinander beabstandet angeordnete und drehbar gelagerte Faserträger auf.

Die Herstellung von Bauteilen aus Faserverbundkunststoffen mittels des Strangziehverfahrens ist weithin bekannt. Hierbei werden in der Regel quasi Endlosbauteile erzeugt, welche in ihre Längsrichtung eingebrachte Fasern aufweisen. Die Fasern werden hierbei während oder im Anschluss an einen formgebenden Fertigungsschritt mit einem Matrixmaterial getränkt und folgend ausgehärtet, wodurch ein einfach zu realisierendes und wirtschaftlich vorteilhaftes Verfahren vorliegt, um Bauteile aus einem Faserverbundkunststoff zu realisieren. Ein Nachteil dieser Herstellungsweise liegt jedoch in den somit lediglich in Längsrichtung vorliegenden Fasern, wodurch die mechanische Belastbarkeit gegenüber Bauteilen, welche auch in Winkellage zur Längsrichtung eingebrachte Fasern aufweisen, begrenzt ist.

Bauteile, welche sowohl Fasern in Längsrichtung sowie in Winkellage und hierbei insbesondere senkrecht zur Längsrichtung aufweisen, können beispielsweise dadurch erzeugt werden, dass während des Strangzieh- oder auch Pultrusionsverfahrens Halbzeuge in das Bauteil eingezogen werden, welche Fasern in Winkellage zur Längsrichtung aufweisen. Eine andere Möglichkeit besteht zudem in der Umwicklung der mittels des Strangziehverfahrens erzeugten Bauteile in einem sich an das Strangziehverfahren anschließenden weiteren Prozess, was in der Durchführung einfacher, jedoch ebenso kostenintensiv wie die Verwendung von zusätzlichen Halbzeugen ist.

So beschreibt die DE 10 2016 215 953 A1 ein Wickelverfahren sowie eine Wickelvorrichtung zum kontinuierlichen Bewickeln eines insbesondere bereits mittels eines Strangziehverfahrens erzeugten Kerns über wenigstens drei konzentrisch zum Kern und gegenüber diesem rotierend angeordnete Wicklungsträger. Hierbei erfolgt die Bewicklung entsprechend senkrecht zur Längsachse des Kerns.

Zusätzlich zu der bisher beschriebenen Vorgehensweise sind aus dem Stand der Technik weitere Möglichkeiten der Herstellung von Bauteilen aus Faserverbundkunststoffen mit nicht ausschließlich in Längsrichtung der Bauteile eingebrachten Fasern bekannt.

In der DE 10 2012 201 262 A1 wird hierzu ein Strangziehverfahren aufgezeigt, im Rahmen dessen auf einen aufblasbaren Kern und in Winkellage zu dessen Längsrichtung mehrere Fasern zu einem Hohlkörper geflochten werden. Ein Einbringen der Fasern in Längsrichtung des Kerns erfolgt dabei jedoch nicht.

Gattungsbildend zum eingangs Genannten offenbart die DE 10 2015 214 909 A1 überdies eine Vorrichtung zur Herstellung von geflochtenen, faserverstärkten Kunststoffhohlprofilen, wobei zur Fertigung der Kunststoffhohlprofile Fasern in Längsrichtung von einer Stelllage sowie mittels dreier Wickelräder in Winkellage zur Längsrichtung auf einen Flechtkern aufgebracht werden. Aufgrund der rotatorischen Bewegung gleich dreier Wickelräder sind hohe Massen zu bewegen, was nachteilig einen hohen Anlagenverschleiß mit sich bringt und zudem einen komplexen Aufbau der Vorrichtung bedingt. Zudem ist keine unterbrechungsfreie Herstellung mit einem geringen Ausschuss des Kunststoffhohlprofils möglich, da die zum Wechsel der drei Wickelräder notwendige Umrüstzeit derart hoch ist, dass die Herstellung unterbrochen und die Wickelräder aufwendig ausgetauscht werden müssen.

Durch die DE 10 2015 214 076 B3 ist eine weitere gattungsbildende Vorrichtung zur Fertigung von faserverstärkten Strangprofilen bekannt, wobei eine Vielzahl von drehbar gelagerten, Fasern tragenden Faserspulen koaxial zu einer Strangachse angeordnet ist und die Fasern von den Faserspulen in Winkellage zur Strangachse auf das Strangprofil aufgebracht werden.

Vor diesem Hintergrund liegt der Erfindung die Aufgabe zugrunde, eine Strangziehvorrichtung der eingangs genannten Art derart auszuführen, dass der Anlagenverschleiß minimiert und der Aufbau vereinfacht werden. Des Weiteren liegt der Erfindung die Aufgabe zugrunde, ein Strangziehverfahren der eingangs genannten Art derart auszugestalten, dass eine unterbrechungsfreie Herstellung mit einem geringen Ausschuss ermöglicht wird.

Die erstgenannte Aufgabe wird gelöst mit einer Strangziehvorrichtung gemäß den Merkmalen des Patentanspruchs 1. Die zugehörigen Unteransprüche betreffen besonders zweckmäßige Weiterbildungen der Erfindung.

Erfindungsgemäß ist also eine Strangziehvorrichtung, hierbei zur Herstellung von Faserverbundbauteilen vorgesehen, welche eine Wickeleinrichtung zur Umwicklung von parallel zu einer Mittellängsachse der Wickeleinrichtung verlaufendem - insbesondere längsgerichtetem - Fasermaterial und/oder gegebenenfalls einzubringendem Verstärkungsmaterial aufweist. Dabei erfolgt die Umwicklung mit zumindest einer Verstärkungsfaser in Winkellage zur Mittellängsachse und somit entsprechend zur Längsachse des zu erzeugenden Faserverbundbauteils. Zu beachten ist in diesem Zusammenhang, dass das Umwickeln des Fasermaterials und/oder des Verstärkungsmaterials vor der Tränkung der durch die Umwicklung erzeugten Faserverbindung aus Fasermaterial und/oder Verstärkungsmaterial sowie Verstärkungsfaser mit Matrixmaterial erfolgt, wodurch gegenüber einer nachträglichen Umwicklung die mechanischen Eigenschaften des Faserverbundbauteils verbessert werden können und somit eine höhere mechanische Belastbarkeit vorliegt. Die Wickeleinrichtung wäre demnach in Abzugsrichtung vor einer Tränkungs- und/oder Verfestigungseinrichtung der Strangziehvorrichtung anzuordnen. Die Wickeleinrichtung weist zur Umwicklung zudem wenigstens zwei in Richtung der und koaxial zur Mittellängsachse zueinander beabstandet angeordnete und drehbar gelagerte Faserträger - zur Aufnahme und/oder Bevorratung der Verstärkungsfaser - auf, wobei diese Faserträger wechselnd mittels wenigstens eines Mitnehmers der Wickeleinrichtung mit einem drehbar gelagerten und koaxial zu den Faserträgern und der Mittellängsachse angeordneten Wickelkörper drehfest verbindbar und nach höchstens einem Wechsel der Faserträger auch verbunden sind. Somit wird ein konstruktiv einfacher und somit kostengünstiger, wartungsarmer und zuverlässiger Aufbau der Strangziehvorrichtung garantiert, was sich in einer möglichen Rotation ohne Unwucht, der Bewegung lediglich geringer Massen und dadurch einer Reduzierung des Verschleißes der Strangziehvorrichtung wiederspiegelt.

Betreffend den wenigstens einen Mitnehmer ist es denkbar, dass pro Faserträger ein Mitnehmer und somit derer zwei an der Wickeleinrichtung angeordnet sind, wodurch die Mitnehmer jeweils abwechselnd in Eingriff zu bringen wären. Demnach wäre ein Mintnehmer im Eingriff, welcher den ersten Faserträger mit dem Wickelkörper verbindet, während der zweite Mitnehmer nicht im Eingriff steht und somit der zweite Faserträger nicht mit dem Wickelkörper verbunden wäre. Neben dem mittels des Mitnehmers über den Wickelkörper in Rotation versetzten Faserträger würde jedoch auch der nicht über den Mitnehmer in Eingriff stehende Faserträger durch Verbindung mit dem Wickelkörper über die Verstärkungsfaser in Rotation versetzt werden.

Der Wickelkörper kann hierbei im Allgemeinen als ein Hohlzylinder oder eine Hohlwelle oder aber nach Art eines Spinnflügels mit wenigstens einem oder mehreren Armen ausgebildet sein. Die Faserträger sollten zudem insbesondere als Spule ausgebildet sein, welche die Verstärkungsfasern aufnehmen und/oder bevorraten.

Es ist zudem denkbar, dass das z. B. von einem Speicher wie einer Stelllage abgezogene Fasermaterial und/oder das Verstärkungsmaterial vor dem Transport in die Wickeleinrichtung in geringem Maße vorgefestigt wird, um während des Umwickelns mit der Verstärkungsfaser ein Mindestmaß an Stabilität aufzuweisen. Eine andere Möglichkeit bestünde ferner in der Verwendung eines Kerns, welcher möglichst als verlorener Kern ausgeführt ist, auf den das Fasermaterial und gegebenenfalls einzubringendes Verstärkungsmaterial wie Matten und/oder Fliesen aufgebracht und anschließend in der Wickeleinrichtung umwickelt wird.

In einer überaus vorteilhaften Weiterbildung der Erfindung weist der Wickelkörper einen drehfest verbundenen Ableger zum Umwickeln des Fasermaterials mit der Verstärkungsfaser auf, wobei der Ableger an dem Wickelkörper entsprechend drehfest angeordnet oder an diesem ausgeformt sei. Mittels des Ablegers lässt sich hierbei unter anderem der Wickelwinkel und somit die Winkellage sowie der Wickelabstand der Verstärkungsfaser vorteilhaft bestimmen. Standardmäßig wäre eine Winkellage von 90 Grad zu Faser- und/oder Verstärkungsmaterial vorzugeben. Die Winkellage kann hierbei jedoch in einem Bereich von 70 Grad bis 110 Grad liegen.

Ist eine Ausführungsform der Strangziehvorrichtung derart ausgestaltet, dass die Wickeleinrichtung und/oder der Mitnehmer in Richtung der Mittellängsachse beweglich ausgebildet ist, wobei die Wickeleinrichtung zwischen einer Ablageposition und einer in Abzugsrichtung zur Ablageposition beabstandeten Vorlaufposition verfahrbar ist, so ist dies dahingehend als vorteilhaft zu betrachten, dass im Falle der Verfahrbarkeit des Mitnehmers lediglich ein Mitnehmer vonnöten wäre, um je einen der Faserträger mit dem Wickelkörper drehfest zu verbinden. Hierfür müsste der Mitnehmer zumindest über die Strecke zwischen den Faserträgern entlang der Mittellängsachse der Wickeleinrichtung relativ zum Wickelkörper verfahrbar ausgeführt sein. Im Hinblick auf die Wickeleinrichtung an sich, ließe sich durch eine Verfahrbarkeit dieser ein absatzloses Strangziehverfahren durchführen, mittels welchem sich Faserverbundbauteile ohne Fehlstelle, d. h. mit einer durchgehenden Umwicklung des Fasermaterials und/oder Verstärkungsmaterials mit der Verstärkungsfaser und somit im Wesentlichen ausschusslos erzeugen ließen.

Die Abzugsrichtung ist hierbei die Richtung, in welche das Fasermaterial und/oder das Verstärkungsmaterial sowie die Verstärkungsfasern während des Strangziehverfahrens durch die Strangziehvorrichtung transportiert, also im Wesentlichen mit einer definierten Abzugsgeschwindigkeit gezogen werden. In die Abzugsrichtung wird folglich auch ein quasi Endlos-Faserverbundbauteil durch die Strangzieheinrichtung transportiert, welches nach der Tränkung und Verfestigung der Faserverbindung vorliegt. Zudem wird das Endlos-Faserverbundbauteil regelmäßig durch eine in Abzugsrichtung auf die Tränkungs- und/oder Verfestigungseinrichtung folgende Trenneinrichtung zu den Faserverbundbauteilen separiert.

In einer zudem Erfolg versprechenden Ausbildung der Erfindung weist die Strangziehvorrichtung mindestens ein Reservoir zur Zufuhr zumindest einer Verstärkungsfaser zu wenigstens einem der Faserträger auf, wodurch sich vorteilhaft ein kontinuierliches Strangziehverfahren realisieren ließe, indem bei Erschöpfung der Verstärkungsfaser auf einem Faserträger eine Verstärkungsfaser aus dem Reservoir auf diesen Faserträger aufgespult wird. Es können hierbei mehrere Reservoirs vorgesehen sein, zwischen welchen ebenfalls bei Erschöpfung, insbesondere eines den Faserträgern zuführenden Reservoirs, eine Übertragung der Verstärkungsfaser ermöglicht ist.

Eine gewinnbringende Weiterbildung der erfindungsgemäßen Strangziehvorrichtung ist überdies dadurch gekennzeichnet, dass der Wickelkörper zwischen den Faserträgern und der Mittellängsachse angeordnet ist, sodass dieser das Fasermaterial und/oder gegebenenfalls das Verstärkungsmaterial in Umfangsrichtung, normal zur Mittellängsachse umschließt. Dies stellt hierbei eine vorteilhafte Anordnung des Wickelkörpers dar, da dadurch eine konstruktiv einfache Möglichkeit geschaffen wird, das parallel zur Mittellängsachse der Wickeleinrichtung verlaufende Fasermaterial und/oder Verstärkungsmaterial über den Wickelkörper bzw. den Ableger des Wickelkörpers mit der Verstärkungsfaser zu umwickeln.

Die zweitgenannte Aufgabe wird gelöst mit einem Strangziehverfahren gemäß den Merkmalen des Patentanspruchs 6. Die zugehörigen Unteransprüche betreffen besonders zweckmäßige Weiterbildungen der Erfindung.

Erfindungsgemäß ist somit weiterhin ein Strangziehverfahren zur Durchführung mit der Strangziehvorrichtung vorgesehen, wobei mittels der Wickeleinrichtung parallel zur Mittellängsachse der Wickeleinrichtung verlaufendes - insbesondere längsgerichtetes - Fasermaterial mit zumindest einer Verstärkungsfaser in Winkellage zur Mittellängsachse umwickelt wird. Hierbei wäre die Verstärkungsfaser entsprechend auf wenigstens einer von zwei Faserträgern der Wickeleinrichtung bevorratet. Zudem wird die das Fasermaterial - mittels des Ablegers und bedingt durch die Rotation des Wickelkörpers - umwickelnde Verstärkungsfaser von einem der oder dem nicht über den Mitnehmer mit dem Wickelkörper verbundenen Faserträger abgespult. Somit können zu Beginn des Strangziehverfahrens einerseits auf beiden Faserträgern Verstärkungsfasern bevorratet sein, wobei zunächst keiner der Faserträger über den Mitnehmer mit dem Wickelkörper verbunden ist. Andererseits ist es möglich, dass lediglich auf einem der Faserträger eine Verstärkungsfaser bevorratet ist, wobei der Faserträger, welcher keine Verstärkungsfaser bevorratet, folglich über den Mitnehmer mit dem Wickelkörper drehfest verbunden ist. In beiden Fällen wird jedoch von einem oder dem Faserträger, auf welchem die Verstärkungsfaser bevorratet ist, die umwickelnde Verstärkungsfaser abgespult und über den durch den Wickelkörper in Rotation versetzten Ableger das Fasermaterial und/oder das Verstärkungsmaterial umwickelt. Dabei erfolgt bei Erreichen einer unteren Füllgradgrenze des abspulenden Faserträgers ein Wechsel des die Verstärkungsfaser abspulenden Faserträgers, sodass ein quasi kontinuierliches Strangziehverfahren vorliegt, bei welchem der Transport des Fasermaterials und/oder des Verstärkungsmaterials durch die Strangziehvorrichtung bei einer Erschöpfung der auf dem Faserträger bevorrateten Verstärkungsfaser nicht unterbrochen werden muss. Aus diesem Grund läge vorteilhaft lediglich eine geringe Fehlstelle der Verstärkungsfaser im zu erzeugenden Faserverbundbauteil, welche durch den Wechsel bedingt wird, und somit ein geringer Ausschuss vor. Solche Fehlstellen sind zudem meist vertretbar und können in den nachfolgenden Verfahrensschritten einfach entfernt werden. Bei einer sehr hohen Auslastung, einem sehr hohen Bedarf an Faserverbundbauteilen, einer sehr geringen Abzugsgeschwindigkeit oder hohen Materialkosten des Fasermaterials und/oder des Matrixmaterials sowie einer Kombination der vorgenannten Rahmenbedingungen kann jedoch ein Strangziehverfahren, welches eine Herstellung der Faserverbundbauteile ohne Fehlstellen ermöglicht, wünschenswert oder erforderlich sein.

Ein weiterer vorteilhafter Aspekt des erfindungsgemäßen Strangziehverfahrens liegt weiterhin darin, dass insbesondere im Vergleich zu einer nachträglichen, separaten Wicklung weniger Arbeitsschritte notwendig sind, wodurch eine Kostenreduzierung ermöglicht wird.

In einer als mit Vorteil behaftet zu betrachtenden Weiterbildung des erfindungsgemäßen Strangziehverfahrens wird nach höchstens einem Wechsel, d. h. nach einem erstem Wechsel oder unmittelbar nach Beginn des Strangziehverfahrens, zugleich dem Abspulen der Verstärkungsfaser, hierbei vom abspulenden Faserträger, die aus dem Reservoir zugeführte Verstärkungsfaser auf den über den Mitnehmer mit dem Wickelkörper drehfest verbundenen Faserträger - bis zu einem durch die Dauer des Abspulens bedingten maximalen Füllgrad - aufgespult. Dies birgt den Vorteil, dass bei einem Wechsel der Faserträger stets einer der Faserträger die Verstärkungsfaser bevorratet, was zu einem quasi kontinuierlichen Strangziehverfahren beiträgt, da hierdurch eine Umrüstzeit minimal gehalten werden kann. Ein Aufspulen nach einem ersten Wechsel ist hierbei lediglich vorgesehen, wenn bei Beginn des Strangziehverfahrens beide Faserträger mit Verstärkungsfasern bevorratet sind.

Als weithin vielversprechend stellt sich zudem eine Ausführungsform des Strangziehverfahrens dar, bei der bei dem Wechsel des abspulenden Faserträgers der Mitnehmer und die aus dem Reservoir zugeführte Verstärkungsfaser zum Aufspulen auf den vor dem Wechsel abspulenden Faserträger mit dem vor dem Wechsel abspulenden Faserträger verbunden wird. Durch das Verbinden des Mitnehmers mit dem vor dem Wechsel abspulenden Faserträger wird dieser mit dem Wickelkörper drehfest verbunden und somit für das Aufspulen der Verstärkungsfaser aus dem Reservoir vorbereitet. Bei einem parallelen Verbinden der entsprechenden aus dem Reservoir zugeführten Verstärkungsfaser wird der vor dem Wechsel abspulende Faserträger auf den Wechsel folgend zum aufspulenden Faserträger, auf welchen bedingt durch die über den Mitnehmer vom Wickelkörper eingekoppelte Rotation die vom Reservoir zugeführte Verstärkungsfaser auf den nun aufspulenden Wickelkörper übertragen und somit bevorratet wird.

Wird zudem in einer Weiterbildung bei dem Wechsel die auf dem vor dem Wechsel nicht abspulenden Faserträger bevorratete Verstärkungsfaser mit dem Ableger des Wickelkörpers verbunden, so steht in kontinuierlicher Weise vor und nach einem Wechsel ein abspulender Faserträger zur Verfügung, wodurch gewinnbringend eine quasi ununterbrochene Umwicklung des Fasermaterials und/oder des Verstärkungsmaterials realisierbar ist.

Eine Ausbildung der Erfindung ist auch dann als vielversprechend anzusehen, wenn der Wechsel der Verstärkungsfaser beim Verfahren des Wickelkörpers in die und/oder der Positionierung des Wickelkörpers in der Vorlaufposition erfolgt. Dadurch wird es ermöglicht, ein absatzloses Strangziehverfahren durchzuführen, mittels welchem sich Faserverbundbauteile ohne Fehlstelle, d. h. mit einer durchgehenden Umwicklung des Fasermaterials und/oder Verstärkungsmaterials mit der Verstärkungsfaser und somit im Wesentlichen ausschusslos erzeugen ließen. Zu diesem Zweck wäre eine Verfahrgeschwindigkeit der Wickeleinrichtung mit einer Rotationsgeschwindigkeit des Wickelkörpers und der Abzugsgeschwindigkeit zu koordinieren. Beispielsweise muss die Verfahrgeschwindigkeit deutlich höher sein als die Abzugsgeschwindigkeit, um die notwendige Zeit für das Umrüsten vorzuhalten. Damit einhergehend muss aber auch die Rotationsgeschwindigkeit des Wickelkörpers angepasst werden, um das geforderte Ablegebild der Verstärkungsfaser, welches unter anderem durch die Winkellage sowie den Wickelabstand bestimmt wird, zu erhalten. Zudem muss die Verfahrstrecke vorgehalten werden und auf die Abzugsgeschwindigkeit sowie die Verfahrgeschwindigkeit und die erforderliche Umrüstzeit abgestimmt werden.

Die Erfindung lässt zahlreiche Ausführungsformen zu. Zur weiteren Verdeutlichung ihres Grundprinzips sind zwei davon in der Zeichnung dargestellt und werden nachfolgend beschrieben. Die Zeichnung zeigt in
- Fig. 1: einen Teil der erfindungsgemäßen Strangziehvorrichtung mit einer Wickeleinrichtung;
- Fig. 2a bis 2d: ein Strangziehverfahren mit einer nicht verfahrbaren Wickeleinrichtung;
- Fig. 3a bis 3d: ein Strangziehverfahren mit einer verfahrbaren Wickeleinrichtung.

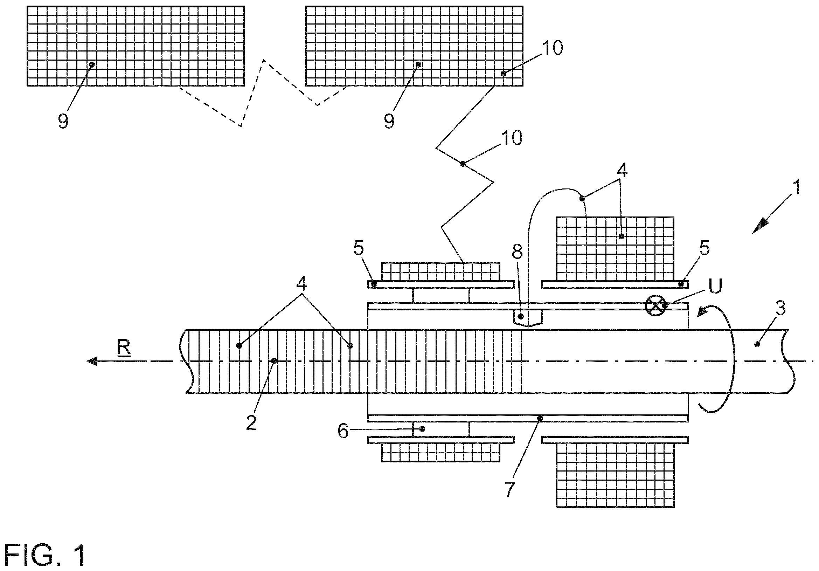

Figur 1 zeigt einen Teil der erfindungsgemäßen Strangziehvorrichtung mit der Wickeleinrichtung 1. Die Wickeleinrichtung 1 dient hierbei der Umwicklung von parallel zur Mittellängsachse 2 der Wickeleinrichtung 1 verlaufendem Fasermaterial 3 mit der Verstärkungsfaser 4, wobei das Fasermaterial 3 in Winkellage zur Mittellängsachse 2 und somit auch zum Fasermaterial 3 mit der Verstärkungsfaser 4 umwickelt wird. Die Wickeleinrichtung 1 weist hierfür zwei in Richtung der Mittellängsachse 2 und zudem koaxial zur Mittellängsachse 2 zueinander beabstandet angeordnete und drehbar gelagerte Faserträger 5 auf. Diese Faserträger 5 sind hierbei mittels des in Richtung der Mittellängsachse 2 beweglich ausgebildeten Mitnehmers 6 der Wickeleinrichtung 1 mit dem drehbar gelagerten und koaxial zu den Faserträgern 5 und der Mittellängsachse 2 angeordneten Wickelkörper 7 drehfest verbindbar, wobei in der Darstellung der Figur 1 der dem abspulenden Faserträger 5 in Abzugsrichtung R nachgelagerte aufspulende Faserträger 5 über den Mitnehmer 6 mit dem Wickelkörper 7 drehfest verbunden ist, sodass auf diesen aufgrund der Rotation des Wickelkörpers 7 und den hierdurch ebenfalls in Rotation versetzten aufspulenden Faserträger 5 die Verstärkungsfaser 10 aus den Reservoirs 9 zugeführt wird. Die zwei Reservoirs 9 können hierbei bei Durchführung des Strangziehverfahrens miteinander verbunden werden, sodass eine quasi endlose Bevorratung der Verstärkungsfaser 10 über die Reservoirs 9 möglich ist. Zur Durchführung der Umwicklung des Fasermaterials 3 mit der Verstärkungsfaser 4 weist der in diesem Fall als eine Welle ausgebildete Wickelkörper 7 den drehfest mit dem Wickelkörper 7 verbundenen Ableger 8 auf, wobei Wickelkörper 7 und Ableger 8 zwischen den Faserträgern 5 und der Mittellängsachse 2 angeordnet sind, sodass der Wickelkörper 7 das Fasermaterial 3 in Umfangsrichtung U, normal zur Mittellängsachse 2 umschließt.

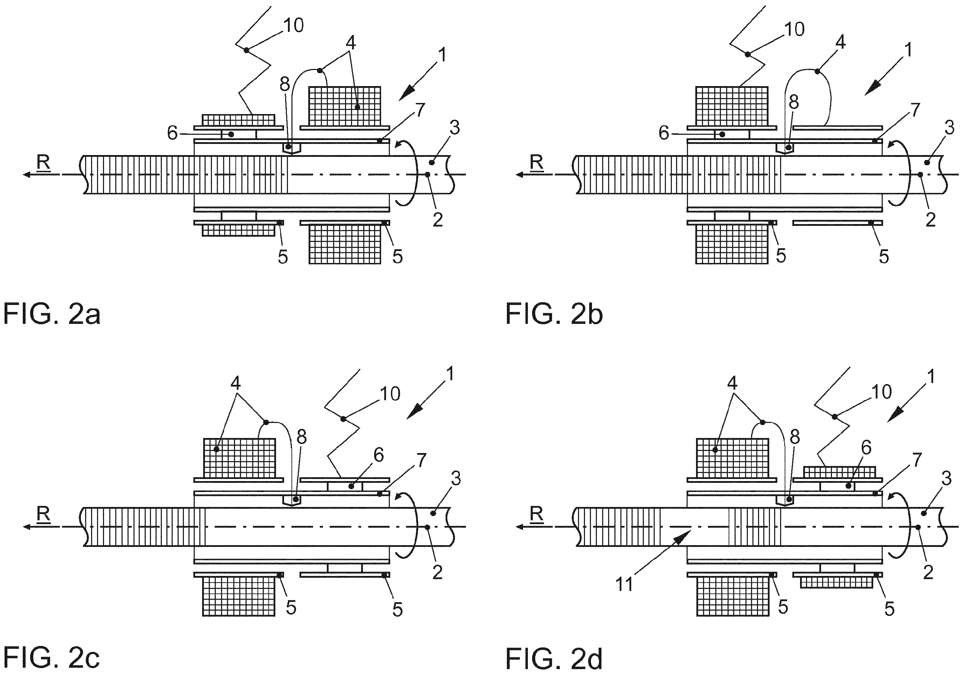

Die Figuren 2a bis 2d zeigen die Wickelvorrichtung 1 der Strangziehvorrichtung während einer Weiterbildung des erfindungsgemäßen Strangziehverfahrens, wobei die Wickelvorrichtung 1 entlang der Mittellängsachse 2 nicht verfahrbar ausgestaltet ist, wodurch wie in Figur 2d aufgezeigt, eine Fehlstelle 11 in der durch die Umwicklung des Fasermaterials 3 mit der Verstärkungsfaser 4 erzeugten Faserverbindung entsteht, in welcher keine in Winkellage zum Fasermaterial 3 eingebrachte Verstärkungsfaser 4 vorliegt. Wie den Darstellungen der Figuren 2a bis 2d zu entnehmen ist, wird im Rahmen des Strangziehverfahrens der dargestellten Weiterbildung die Verstärkungsfaser 4 jeweils von dem nicht über den Mitnehmer 6 mit dem Wickelkörper 7 verbundenen Faserträger 5 abgespult. In Figur 2a ist hierbei eine mögliche Ausgangslage dargestellt, in welcher auf den über den Mitnehmer 6 mit dem Wickelkörper 7 verbundenen Faserträger 5 zugleich dem Abspulen der Verstärkungsfaser 4, die Verstärkungsfaser 10 aufgespult wird. Bei Erreichen einer unteren Füllgradgrenze des abspulenden Faserträgers 5, die wie in Figur 2b dargestellt in diesem Fall die nahezu vollständige Erschöpfung der Verstärkungsfaser 4 auf dem abspulenden Faserträger 5 respektive die nahezu vollständige Leerung des abspulenden Faserträgers 5 darstellt, erfolgt der Wechsel des die Verstärkungsfaser 4 abspulenden Faserträgers 5. Der Wechsel erfolgt hierbei derart, dass einerseits der Mitnehmer 6 mit dem vor dem Wechsel abspulenden Faserträger 5 verbunden wird, wofür der Mitnehmer 6 aus dem Eingriff mit dem Wickelkörper 7 sowie dem vor dem Wechsel aufspulenden Faserträger 5 genommen wird und entlang der Mittellängsachse 2 zum vor dem Wechsel abspulenden Faserträger 5 verfahren und mit diesem sowie dem Wickelkörper 7 in Eingriff gebracht wird. Weiterhin wird die Verstärkungsfaser 10 zum Aufspulen auf den vor dem Wechsel abspulenden Faserträger 5 mit diesem Faserträger 5 verbunden. Überdies wird die auf dem vor dem Wechsel nicht abspulenden und in diesem Fall somit aufspulenden Faserträger 5 bevorratete Verstärkungsfaser 4 mit dem Ableger 8 des Wickelkörpers 7 verbunden. Das Resultat dieses Wechsels ist hierbei in der Figur 2c dargestellt. Aufgrund des während des Wechsels weiterhin voranschreitenden Abzugs des Fasermaterials 3 in die Abzugsrichtung R entsteht die bereits erwähnte und in Figur 2d aufgezeigte Fehlstelle 11. Figur 2d zeigt zudem die Wickeleinrichtung 1, bei welcher auf den vor dem Wechsel abspulenden Faserträger 5 ein wiederum bereits ansteigender Füllgrad der Verstärkungsfaser 10 zu verzeichnen ist.

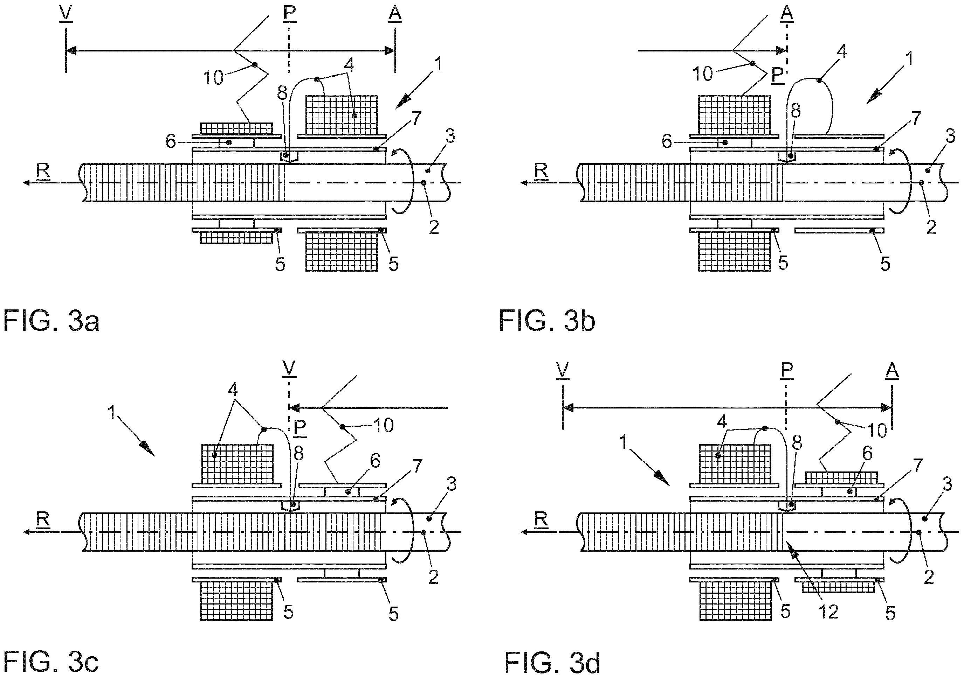

In den Figuren 3a bis 3d ist die Wickelvorrichtung 1 der Strangziehvorrichtung in einer in Richtung der Mittellängsachse 2 zwischen der Ablageposition A und der in Abzugsrichtung R zur Ablageposition A beabstandeten Vorlaufposition V verfahrbaren Weiterbildung aufgezeigt. Mittels der so verfahrbaren Wickeleinrichtung 1 ist es möglich, das Strangziehverfahren derart auszugestalten, dass die in der Figur 2d dargestellte Fehlstelle 11 nicht erzeugt wird, wobei hierfür der Wechsel der Verstärkungsfaser 4 in der Vorlaufposition V erfolgt. Hierbei ist in der Figur 3a erneut eine mögliche Ausgangslage dargestellt, in welcher auf den über den Mitnehmer 6 mit dem Wickelkörper 7 verbundenen Faserträger 5 zugleich dem Abspulen der Verstärkungsfaser 4 vom abspulenden Faserträger 5, die Verstärkungsfaser 10 aufgespult wird. Dabei befindet sich der Wickelkörper 7 in Bewegung und wird aus der Vorlaufposition V in die Ablageposition A verfahren, wobei während des Verfahrens das Fasermaterial 3 mit der Verstärkungsfaser 4 in der aktuellen Position P umwickelt wird. Das Umwickeln des Fasermaterials 3 wird zudem wie in Figur 3b aufgezeigt in der Ablageposition A fortgeführt, wobei die aktuelle Position P der Ablageposition A gleicht. Bei Erreichen der unteren Füllgradgrenze des abspulenden Faserträgers 5 erfolgt der Wechsel des die Verstärkungsfaser 4 abspulenden Faserträgers 5. Der Wechsel erfolgt hierbei derart, dass der Wickelkörper 1 wie in der Figur 3c dargestellt in Abzugsrichtung R in die Vorlaufposition V verfahren wird, wobei diese nun wiederum der aktuellen Position P entspricht. In der Vorlaufposition V wird der Mitnehmer 6 mit dem vor dem Wechsel abspulenden Faserträger 5 verbunden, wofür der Mitnehmer 6 aus dem Eingriff mit dem Wickelkörper 7 sowie dem vor dem Wechsel aufspulenden Faserträger 5 genommen wird und entlang der Mittellängsachse 2 zum vor dem Wechsel abspulenden Faserträger 5 verfahren und mit diesem sowie dem Wickelkörper 7 in Eingriff gebracht wird. Weiterhin wird die Verstärkungsfaser 10 zum Aufspulen auf den vor dem Wechsel abspulenden Faserträger 5 mit diesem Faserträger 5 verbunden. Überdies wird die auf dem vor dem Wechsel nicht abspulenden und in diesem Fall somit aufspulenden Faserträger 5 bevorratete Verstärkungsfaser 4 mit dem Ableger 8 des Wickelkörpers 7 verbunden. Auf den Wechsel folgend wird die Wickeleinrichtung 1 entgegengesetzt der Abzugsrichtung R in die Ablageposition A verfahren, wobei bei der Übereinstimmung der aktuellen Position P der Wickeleinrichtung 1 und somit des Ablegers 8 mit der Wickelendlage 12 der Verstärkungsfaser 4 am Fasermaterial 3, die Umwicklung des Fasermaterials 3 mit der Verstärkungsfaser 4 fortgesetzt wird.

### Bezugszeichenliste

- 1: Wickeleinrichtung
- 2: Mittellängsachse
- 3: Fasermaterial
- 4: Verstärkungsfaser
- 5: Faserträger

- 6: Mitnehmer
- 7: Wickelkörper
- 8: Ableger
- 9: Reservoir
- 10: Verstärkungsfaser

- 11: Fehlstelle
- 12: Wickelendlage

- A: Ablageposition
- P: aktuelle Position
- R: Abzugsrichtung
- U: Umfangsrichtung
- V: Vorlaufposition

## Patentansprüche

1. Strangziehvorrichtung, aufweisend eine Wickeleinrichtung (1) zur Umwicklung von parallel zu einer Mittellängsachse (2) der Wickeleinrichtung (1) verlaufendem Fasermaterial (3) mit zumindest einer Verstärkungsfaser (4) in Winkellage zur Mittellängsachse (2), wobei die Wickeleinrichtung (1) wenigstens zwei in Richtung der und koaxial zur Mittellängsachse (2) zueinander beabstandet angeordnete und drehbar gelagerte Faserträger (5) aufweist, **dadurch gekennzeichnet, dass** die Faserträger (5) wechselnd mittels wenigstens eines Mitnehmers (6) der Wickeleinrichtung (1) mit einem drehbar gelagerten und koaxial zu den Faserträgern (5) und der Mittellängsachse (2) angeordneten Wickelkörper (7) drehfest verbindbar sind.

2. Strangziehvorrichtung nach Anspruch 1, **dadurch gekennzeichnet, dass** der Wickelkörper (7) einen drehfest verbundenen Ableger (8) zum Umwickeln des Fasermaterials (3) mit der Verstärkungsfaser (4) aufweist.

3. Strangziehvorrichtung nach den Ansprüchen 1 oder 2, **dadurch gekennzeichnet, dass** die Wickeleinrichtung (1) und/oder der Mitnehmer (6) in Richtung der Mittellängsachse (2) beweglich ausgebildet ist, wobei die Wickeleinrichtung (1) zwischen einer Ablageposition (A) und einer in Abzugsrichtung (R) zur Ablageposition (A) beabstandeten Vorlaufposition (V) verfahrbar ist.

4. Strangziehvorrichtung nach zumindest einem der vorangehenden Ansprüche, **dadurch gekennzeichnet, dass** die Strangziehvorrichtung mindestens ein Reservoir (9) zur Zufuhr zumindest einer Verstärkungsfaser (10) zu wenigstens einem der Faserträger (5) aufweist.

5. Strangziehvorrichtung nach zumindest einem der vorangehenden Ansprüche, **dadurch gekennzeichnet, dass** der Wickelkörper (7) zwischen den Faserträgern (5) und der Mittellängsachse (2) angeordnet ist, sodass dieser das Fasermaterial (3) in Umfangsrichtung (U), normal zur Mittellängsachse (2) umschließt.

6. Strangziehverfahren mit einer Strangziehvorrichtung nach zumindest einem der vorangehenden Ansprüche, wobei mittels der Wickeleinrichtung (1) parallel zur Mittellängsachse (2) der Wickeleinrichtung (1) verlaufendes Fasermaterial (3) mit zumindest einer Verstärkungsfaser (4) in Winkellage zur Mittellängsachse (2) umwickelt wird, **dadurch gekennzeichnet, dass** die das Fasermaterial (3) umwickelnde Verstärkungsfaser (4) von einem der oder dem nicht über den Mitnehmer (6) mit dem Wickelkörper (7) verbundenen Faserträger (5) abgespult wird, wobei bei Erreichen einer unteren Füllgradgrenze des abspulenden Faserträgers (5) ein Wechsel des die Verstärkungsfaser (4) abspulenden Faserträgers (5) erfolgt.

7. Strangziehverfahren nach Anspruch 6, **dadurch gekennzeichnet, dass** nach höchstens einem Wechsel zugleich dem Abspulen der Verstärkungsfaser (4), die aus dem Reservoir (9) zugeführte Verstärkungsfaser (10) auf den über den Mitnehmer (6) mit dem Wickelkörper (7) drehfest verbundenen Faserträger (5) aufgespult wird.

8. Strangziehverfahren nach den Ansprüchen 6 oder 7, **dadurch gekennzeichnet, dass** bei dem Wechsel des abspulenden Faserträgers (5) der Mitnehmer (6) und die aus dem Reservoir (9) zugeführte Verstärkungsfaser (10) zum Aufspulen auf den vor dem Wechsel abspulenden Faserträger (5) mit dem vor dem Wechsel abspulenden Faserträger (5) verbunden wird.

9. Strangziehverfahren nach zumindest einem der Ansprüche 6 bis 8, **dadurch gekennzeichnet, dass** bei dem Wechsel die auf dem vor dem Wechsel nicht abspulenden Faserträger (5) bevorratete Verstärkungsfaser (4) mit dem Ableger (8) des Wickelkörpers (7) verbunden wird.

10. Strangziehverfahren nach zumindest einem der Ansprüche 6 bis 9, **dadurch gekennzeichnet, dass** der Wechsel der Verstärkungsfaser (4) beim Verfahren des Wickelkörpers (1) in die und/oder der Positionierung des Wickelkörpers (1) in der Vorlaufposition (V) erfolgt.

## Claims

1. Pultrusion apparatus having a winding device (1) for wrapping fibrous material (3), extending parallel to a longitudinal centre axis (2) of the winding device (1), with at least one reinforcing fibre (4) in an angular position with respect to the longitudinal centre axis (2), wherein the winding device (1) has at least two rotatably mounted fibre carriers (5) that are arranged in a manner spaced apart from one another in the direction of and coaxially with the longitudinal centre axis (2), **characterized in that** the fibre carriers (5) are able to be alternately connected for conjoint rotation, by means of at least one driver (6) of the winding device (1), to a rotatably mounted winding body (7) arranged coaxially with the fibre carriers (5) and the longitudinal centre axis (2).

2. Pultrusion apparatus according to Claim 1, **characterized in that** the winding body (7) has an extension (8), connected for conjoint rotation, for wrapping the fibrous material (3) with the reinforcing fibre (4).

3. Pultrusion apparatus according to Claim 1 or 2, **characterized in that** the winding device (1) and/or the driver (6) is/are configured to be movable in the direction of the longitudinal centre axis (2), wherein the winding device (1) is movable between a deposition position (A) and a forward position (V) spaced apart from the deposition position (A) in the take-off direction (R).

4. Pultrusion apparatus according to at least one of the preceding claims, **characterized in that** the pultrusion apparatus has at least one reservoir (9) for supplying at least one reinforcing fibre (10) to at least one of the fibre carriers (5).

5. Pultrusion apparatus according to at least one of the preceding claims, **characterized in that** the winding body (7) is arranged between the fibre carriers (5) and the longitudinal centre axis (2) such that it surrounds the fibre material (3) in the circumferential direction (U), normal to the longitudinal centre axis (2).

6. Pultrusion method involving a pultrusion apparatus according to at least one of the preceding claims, wherein, by means of the winding device (1), fibre material (3) extending parallel to the longitudinal centre axis (2) of the winding device (1) is wrapped with at least one reinforcing fibre (4) in an angular position with respect to the longitudinal centre axis (2), **characterized in that** the reinforcing fibre (4) wrapping the fibre material (3) is unwound from the fibre carrier (5) or one of the fibre carriers (5) not connected to the winding body (7) via the driver (6), wherein, when unwinding fibre carrier (5) reaches a lower filling limit, the fibre carrier (5) unwinding the reinforcing fibre (4) is changed.

7. Pultrusion method according to Claim 6, **characterized in that** after at most one change, at the same time as the reinforcing fibre (4) is unwound, the reinforcing fibre (10) supplied from the reservoir (9) is wound onto the fibre carrier (5) connected for conjoint rotation to the winding body (7) via the driver (6).

8. Pultrusion method according to Claim 6 or 7, **characterized in that**, when the unwinding fibre carrier (5) is changed, the driver (6) and the reinforcing fibre (10), supplied from the reservoir (9), to be wound up on the fibre carrier (5) unwinding before the change is connected to the fibre carrier (5) unwinding before the change.

9. Pultrusion method according to at least one of Claims 6 to 8, **characterized in that**, during the change, the reinforcing fibre (4) stored on the fibre carrier (5) not unwinding before the change is connected to the extension (8) of the winding body (7).

10. Pultrusion method according to at least one of Claims 6 to 9, **characterized in that** the reinforcing fibre (4) is changed when the winding body (1) is moved into the forward position (V) and/or when the winding body (1) is positioned in the forward position (V).

## Revendications

1. Dispositif de pultrusion, présentant un appareil d'enroulement (1) pour l'enveloppement d'un matériau fibreux (3) s'étendant parallèlement à un axe longitudinal médian (2) de l'appareil d'enroulement (1) avec au moins une fibre de renforcement (4) dans une position angulaire par rapport à l'axe longitudinal médian (2), l'appareil d'enroulement (1) présentant au moins deux supports de fibre (5) agencés à distance l'un de l'autre dans la direction de l'axe longitudinal médian (2) et coaxialement à celui-ci et montés de manière rotative, **caractérisé en ce que** les supports de fibre (5) peuvent être reliés de manière immobile en rotation en alternance, au moyen d'au moins un entraîneur (6) de l'appareil d'enroulement (1), à un corps d'enroulement (7) monté de manière rotative et agencé coaxialement aux supports de fibre (5) et à l'axe longitudinal médian (2).

2. Dispositif de pultrusion selon la revendication 1, **caractérisé en ce que** le corps d'enroulement (7) présente un dispositif de dépôt (8) relié de manière immobile en rotation pour l'enveloppement du matériau fibreux (3) avec la fibre de renforcement (4).

3. Dispositif de pultrusion selon les revendications 1 ou 2, **caractérisé en ce que** l'appareil d'enroulement (1) et/ou l'entraîneur (6) sont configurés sous forme mobile dans la direction de l'axe longitudinal médian (2), l'appareil d'enroulement (1) pouvant être déplacé entre une position de dépôt (A) et une position avancée (V) espacée de la position de dépôt (A) dans la direction d'extraction (R).

4. Dispositif de pultrusion selon au moins l'une quelconque des revendications précédentes, **caractérisé en ce que** le dispositif de pultrusion présente au moins un réservoir (9) pour l'amenée d'au moins une fibre de renforcement (10) à au moins l'un des supports de fibre (5) .

5. Dispositif de pultrusion selon au moins l'une quelconque des revendications précédentes, **caractérisé en ce que** le corps d'enroulement (7) est agencé entre les supports de fibre (5) et l'axe longitudinal médian (2), de telle sorte qu'il entoure le matériau fibreux (3) dans la direction circonférentielle (U), perpendiculairement à l'axe longitudinal médian (2).

6. Procédé de pultrusion avec un dispositif de pultrusion selon au moins l'une quelconque des revendications précédentes, dans lequel, au moyen de l'appareil d'enroulement (1), un matériau fibreux (3) s'étendant parallèlement à l'axe longitudinal médian (2) de l'appareil d'enroulement (1) est enveloppé avec au moins une fibre de renforcement (4) dans une position angulaire par rapport à l'axe longitudinal médian (2), **caractérisé en ce que** la fibre de renforcement (4) enveloppant le matériau fibreux (3) est dévidée à partir de l'un des supports de fibre (5) ou à partir du support de fibre (5) non relié au corps d'enroulement (7) par l'intermédiaire de l'entraîneur (6), un changement du support de fibre (5) dévidant la fibre de renforcement (4) ayant lieu lorsqu'une limite inférieure de degré de remplissage du support de fibre dévidant (5) est atteinte.

7. Procédé de pultrusion selon la revendication 6, **caractérisé en ce qu'**après au plus un changement, en même temps que le dévidage de la fibre de renforcement (4), la fibre de renforcement (10) amenée à partir du réservoir (9) est envidée sur le support de fibre (5) relié de manière immobile en rotation au corps d'enroulement (7) par l'intermédiaire de l'entraîneur (6) .

8. Procédé de pultrusion selon les revendications 6 ou 7, **caractérisé en ce que**, lors du changement du support de fibre dévidant (5), l'entraîneur (6) et la fibre de renforcement (10) amenée à partir du réservoir (9) sont reliés au support de fibre (5) dévidant avant le changement pour l'envidage sur le support de fibre (5) dévidant avant le changement.

9. Procédé de pultrusion selon au moins l'une quelconque des revendications 6 à 8, **caractérisé en ce que**, lors du changement, la fibre de renforcement (4) stockée sur le support de fibre (5) non dévidant avant le changement est reliée au dispositif de dépôt (8) du corps d'enroulement (7).

10. Procédé de pultrusion selon au moins l'une quelconque des revendications 6 à 9, **caractérisé en ce que** le changement de la fibre de renforcement (4) a lieu lors du déplacement du corps d'enroulement (1) vers et/ou du positionnement du corps d'enroulement (1) dans la position avancée (V).
